Europäisches Patentamt

(19) European Patent Office

Office européen des brevets

(11) Veröffentlichungsnummer : **0 146 824**
**B1**

(12) **EUROPÄISCHE PATENTSCHRIFT**

(45) Veröffentlichungstag der Patentschrift :
28.09.88

(51) Int. Cl.⁴ : **G 06 K    9/74**, G 06 K    9/82

(21) Anmeldenummer : 84114581.6

(22) Anmeldetag : 30.11.84

(54) **Verfahren und Anordnung zur Erfassung und/oder Erkennung komplexer Strukturen auf der Basis der "Fuzzy"-Theorie.**

(30) Priorität : 30.11.83 DE 3343335

(43) Veröffentlichungstag der Anmeldung :
03.07.85 Patentblatt 85/27

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
US-A- 3 413 602
US-A- 3 441 724
US-A- 3 636 261
US-A- 3 869 697
OPTICS AND SPECTROSCOPY, Band 52, Nr. 5, Mai 1982, Seite 556, New York, US; M.G. LLIEVA u.a.: "Generalized optical filtering for recognition of printed characters"
APPLIED OPTICS, Band 17, Nr. 1, 1. Januar 1978, Seiten 21-34, New York, US; B. PERNICK u.a.: "Screening of cervical cytological samples using coherent optical processing. Part 1"
PROCEEDINGS OF THE ELEVENTH HAWAII INTERNATIONAL CONFERENCE ON SYSTEM SCIENCES, University of Hawaii, Band II, 1978, Seiten 133-147; D. LAZAK: "Fuzzy sets and artificial intelligence as elements of future mis-installations"
Steinbuch, Weber: "Taschenbuch der Informatik", Berlin 1974, Bd. 1, Seiten 517-523

(73) Patentinhaber : Siemens Aktiengesellschaft Berlin und München
Wittelsbacherplatz 2
D-8000 München 2 (DE)

(72) Erfinder : Lazak, Karl Dieter, Dr. rer. pol.
Karolingerstrasse 27
D-8011 Aschheim (DE)

## Beschreibung

Die Erfindung betrifft ein Verfahren und eine Anordnung zur Erfassung und/oder Erkennung komplexer Strukturen auf der Basis der « Fuzzy »-Theorie gemäß dem Oberbegriff des Patentanspruches 1.

Die Theorie über mehrdeutige Mengen oder kurz « Fuzzy »-Theorie hat für die Bewältigung einer Vielzahl technischer Probleme mit Eigenschaften, die nur mit einer gewissen Unschärfe definierbar sind, in zunehmendem Maße Bedeutung erlangt — man siehe Kandel/Lee : « Fuzzy Switching and Automate » — Crane, Russak and Comp. Inc., New York 1979 sowie Kandel : « Fuzzy Techniques in Pattern Recognition » — John Wiley & Sons, New York 1982, u. a. Seiten 18 bis 20 bezüglich der verschiedenen Anwendungsgebiete.

Die « Fuzzy »-Theorie ist dabei von besonderer Bedeutung für die Architektur neuartiger, nicht sequentiell arbeitender intelligenter Datenverarbeitungssysteme auf der Basis der Quantenfeldtheorie in Verbindung mit der Logik kybernetischer Systeme — Angewandte Informatik 1/72, Seiten 16 bis 30 und 5/74, Seiten 228 bis 232 sowie « Proceedings of the Eleventh Hawaii International Conference on Systems Sciences » University of Hawaii 1978, Seiten 133 bis 147, insbesondere Seite 134 in diesem Zusammenhang.

In der zuletzt genannten Literaturstelle ist zusammenfassend dargelegt, wie in Anlehnung an die Arbeitsweise des menschlichen Gehirns komplexe Strukturen als Systemvektoren in Form elektrodynamisch modulierter Energieübergangszustände eines quantenmechanischen Systems dargestellt und verarbeitet werden können — Seite 139 ff., Abschnitt V.1 bis V.5, wobei wegen der gegebenen Interferenzbeziehung Prinzipien der Holografie anwendbar sind — Seite 144 ff, Abschn. V.6.

Insbesondere ist in Abschnitt V.8 dieser Literaturstelle bereits eine Prozessorstruktur als technische Lösung beschrieben, die aus einer Vielzahl von modulierbaren Informationskanälen und einer demgegenüber geringeren Anzahl von Auswertekanälen besteht, die über eine Interferenzanordnung derartig miteinander gekoppelt sind, daß jeder Auswertekanal die Modulationssignale aller Informationskanäle überlagert empfangen kann. Durch die Informationskanäle werden dabei jeweils sich räumlich und zeitlich überlappende Zonen von energieliefernden Quanten moduliert.

Zur Ausführung von Filterfunktionen können sowohl die Modulationskanäle als auch die Auswertekanäle mit Prozessoren und holografischen Filtersystemen gekoppelt sein, so daß einem abgebildeten bestimmten Systemvektor schließlich ein einziges Schaltelement zugeordnet werden kann, das die gesamte Information des Systemvektors repräsentiert.

Außer dem Hinweis auf die Technik der Holografie enthält die Literaturstelle jedoch keine weiteren Angaben, wie dieser theoretisch begründete Aufbau einer entsprechenden Prozessorstruktur technisch realisiert werden kann. In Steinbuch/Weber : « Taschenbuch der Informatik », Springer Verlag, Berlin 1974, Bd. 3, Seiten 242 bis 247 sind zwar im Rahmen der lokalen Musterverarbeitung außer den im vorliegenden Fall nicht geeigneten parallel arbeitenden elektronischen Prozessoren auch optische Prozessoren beschrieben, die auf der Grundlage von kohärentem Licht arbeiten und bei sehr großer Bildauflösung einfach realisiert werden können sowie in Verbindung mit optischen Bild-Fouriertransformationen, Hologrammen und Punkthologrammen eine effektive Musterverarbeitung ermöglichen. Weitere Hinweise sind auch Bd. 1, Seite 517 ff., Abschn. 4.7.2 des genannten Taschenbuches entnehmbar.

Alle diese optischen Prozessoren erfordern aber komplizierte optische Systeme und teilweise aufwendig zu steuernde Filtersysteme. Außerdem ist ein Übergang in die digitale Weiterverarbeitung nur in der Abbildungsebene eines Transformationssystems vorgesehen. Das gleiche gilt auch für das durch die Schweizer Patentschrift 451 571 bekannte Verfahren — insbesondere FIG 14 mit zugehöriger Beschreibung.

Aufgabe der Erfindung ist es daher, ausgehend von der bekannten Prozessorstruktur für die Darstellung und Verarbeitung komplexer Strukturen die Grundlage für eine vielseitig verwendbare technische Realisierung eines solchen Prozessors zu schaffen. Diese Aufgabe wird im prinzipiellen durch die kennzeichnenden Merkmale des Patentanspruches 1 gelöst.

Gemäß der Erfindung werden im Gegensatz zur bekannten optischen Verarbeitung in der Interferenzebene vorliegende Signale unmittelbar als elektrische Signale bearbeitet, bewertet und digitalisiert ausgewertet. Die Erfindung geht dabei von der Tatsache aus, daß jeder Punkt eines Interferenzfeldes allein für sich Rückschlüsse auf die abzubildende Struktur zuläßt. Man bräuchte also nur ein punktuell vorliegendes Summensignal genau zu bewerten. Da es aber aus technischen Gründen nicht möglich ist, das analoge Summensignal eines einzigen Auswertekanals ausreichend differenziert zu bewerten, werden die Informationen mehrerer Auswertekanäle zur Abbildungsinformation zusammengefaßt und die Anzahl der Bewertungsstufen je Auswertekanal wesentlich reduziert, beispielsweise auf zehn. Trotz dieser wenig differenzierten Bewertung je Auswertekanal ermöglichen jedoch schon wenige Auswertekanäle zusammen aufgrund der bestehenden Fuzzy-Relation die schlagartige Unterscheidung einer sehr großen Anzahl von verschiedenen Strukturen mit einem sehr großen Umfang an Informationsbits und damit die Einkopplung in die digitale Weiterverarbeitung ohne weitere optische Prozesse, z. B. in Form von Transformationen.

Neben der Erfassung unbekannter Strukturen lassen sich gemäß einer Weiterbildung der Erfindung auch bereits bekannte Strukturen in einfacher Weise wiedererkennen, wenn deren Abbildungsinformationen als Bezugsinformationen zum Vergleich mit der jeweils gewonnenen Abbildungsinformation herangezogen werden, was gleichzeitig durch entsprechend viele Verknüpfungsnetzwerke oder Vergleicher möglich ist, so daß Erkennungsprozeduren sehr schnell mit herkömmlichen Mitteln der verdrahteten Logik oder der Datenverarbeitung ausgeführt und auf ein Ein-Bit-Steuersignal reduziert werden können. Dabei kann die Darstellung einer zu erfassenden Struktur in der Interferenzebene abhängig von den gegebenen Randbedingungen entsprechend den Weiterbildungen der Patentansprüche 5 und 6 auf verschiedenem Wege erfolgen, nämlich direkt mit Hilfe kohärenter Strahlung durch holografische Abbildung oder aber indirekt durch Modulation von Trägerwellen in getrennten Kanälen mit den Strukturkenngrößen, was die Anwendungsmöglichkeiten wesentlich erweitert.

Weitere Ansprüche beziehen sich auf Anordnungen zur Durchführung der Verfahren gemäß der Erfindung, wobei insbesondere die Verwendung von Lichtfaserbündeln in Verbindung mit optischen Sternkopplern vorteilhafte Lösungen ergeben.

Einzelheiten der Erfindung seien nachfolgend anhand von in der Zeichnung dargestellten Ausführungsbeispielen näher erläutert. Im einzelnen zeigen

Fig. 1 ein Prinzipschaltbild zur Erläuterung der Auswertung der Abbildungsinformation in einer Interferenzebene,

Fig. 2 die Verteilung der Abbildungsinformation auf die verschiedenen Auswertekanäle zur Erläuterung des theoretischen Hintergrundes,

Fig. 3 ein Prinzipschaltbild zur indirekten Abbildung einer Struktur in der Interferenzebene für vielfache Anwendungsmöglichkeiten,

Fig. 4 ein Prinzipschaltbild zur Ableitung der Modulationssignale für eine Anordnung nach Fig. 3 bei räumlichen Strukturen.

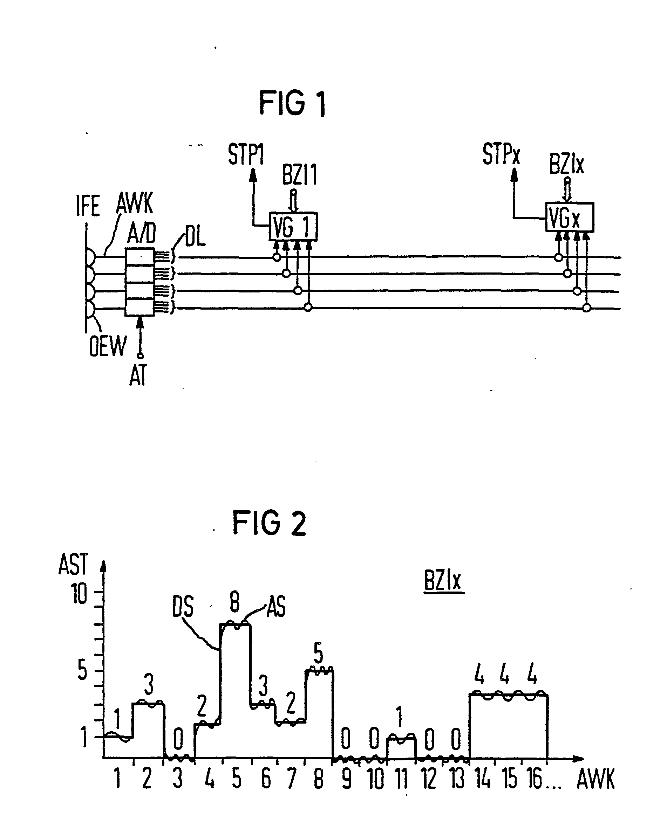

Bei dem in Fig. 1 gezeigten Prinzipschaltbild werden die in der Interferenzebene IFE auftretenden partiellen Signale, z. B. elektromagnetische oder vorzugsweise optische Signale, von geeigneten Empfängern, z. B. optoelektronischen Wandlern OEW, wie Fotodioden, aufgenommen, ggf. verstärkt und über individuelle Auswertekanäle AWK Analog/Digitalwandlern A/D bekannter Art zur Bewertung und direkten Digitalisierung der analogen Signalamplitude zugeführt. Die dabei gewonnenen digitalen Amplitudenwerte eines jeden Analog/Digitalwandlers werden über parallele Signalleitungen zusammen als die jeweilige Abbildungsinformationen der jeweils vorgegebenen Struktur weitergeleitet und bilden den Ausgangspunkt für die weitere digitale Verarbeitung.

Diese digitale Weiterverarbeitung kann bei unbekannten Strukturen darin bestehen, daß die zugehörige Abbildungsinformation in einen Speicher übernommen wird und damit als Bezugsinformation für spätere Erkennungsprozeduren zur Verfügung steht. Andererseits kann die gewonnene Abbildungsinformation parallel mit Hilfe vorhandener Vergleicher, z. B. VG1 bis VGx, mit einer Vielzahl bereits vorhandener Bezugsinformationen, z. B. BZI1 bis BZIx, verglichen werden, um so bereits bekannte Strukturen zu erkennen und durch ein entsprechendes Steuersignal, z. B. ST-P1 am Vergleicher VG1, zu kennzeichnen.

Der gesamte Informationsgehalt einer auf diese Weise schlagartig erfaßten Struktur, z. B. in Umfang von etwa $10^8$ binären Einzelinformationen, kann damit auf ein einziges Bit mit vorgegebener Lage reduziert werden. Andererseits ist der Speicheraufwand für jede Abbildungs- bzw. Bezugsinformation verhältnismäßig gering. So sind z. B. bei Verwendung von $D = 10$ Amplitudenstufen je Auswertekanal vier Bit zur Darstellung eines Kanalwertes und bei z. B. $n = 16$ Auswertekanäle insgesamt $2^6 = 64$ Bit erforderlich.

Trotz der nur geringen Anzahl von Auswertekanälen und Bewertungsstufen können nach der Beziehung $N = D^n$ mit den genannten Werten $n = 16$ und $D = 10$ bis zu $N = 10^{16}$ verschiedene Strukturen erfaßt werden, was eine Speicherkapazität für die Bezugsinformationen von $64 \times 10^{16}$ Bit gegenüber $10 \times 10^{16} = 10^{24}$ Bit entsprechend den $10^{16}$ möglichen Strukturen mit je $10^8$ Informationsbit erfordert und einen Komprimierungsfaktor von etwa $1,5 \times 10^6$ ergibt. Außerdem brauchen die $10^8$ je Struktur nicht seriell nacheinander verarbeitet zu werden, sondern sie werden parallel erfaßt, was die Rechengeschwindigkeit enorm steigert.

Die prinzipielle Darstellung in Fig. 1 zeigt nur eine eindimensionale Anordnung der Empfänger, z. B. der Fotodioden OEW. Tatsächlich sollte bei der Realisierung von einer zweidimensionalen Anordnung in der Interferenzebene IFE entsprechend der flächigen Ausbildung der Interferenzebene ausgegangen werden, also bei 16 Auswertekanälen z. B. von der quadratischen Anordnung aus $4 \times 4$ Kanälen.

Um auch bei flüchtigen Signalen in der Interferenzebene IFE eine ausreichende Auswertestabilität zu gewährleisten, werden die Analog/Digitalwandler A/D, die im übrigen von bekannter Bauart sein können, periodisch getaktet, was mit AT angedeutet ist, wobei die bei den durch den Takt AT festgelegten Auswertezeitpunkten erhaltenen Digitalwerte jeweils bis zum nächsten Auswertezeitpunkt aufrecht erhalten werden. Dieser Takt AT kann in an sich bekannter und zweckmäßiger Weise von einem vorliegenden Systemtakt abgeleitet werden. Dabei ist der Takt zweckmäßig jeweils so zu wählen, daß auch Strukturveränderungen, wie z. B. bei veränderlichen Objekten oder dynamischen Prozessen, eindeutig erfaßt werden können.

Fig. 2 zeigt an einem konkreten Beispiel die Verteilung der Abbildungsinformation in der Interferenzebene IFE auf die einzelnen Auswahlkanäle AWK bei der Anordnung von Fig. 1, wobei angenommen ist, daß insgesamt 16 Auswertekanäle mit jeweils zehn Amplitudenbewertungsstufen vorgesehen sind. Die gezeigte treppenförmige Kurve DS stellt dabei einen durch die Digitalisierung angenäherten Wert dar, wobei die einzelnen Treppenstufen dem analogen Durchschnittsignalwert des tatsächlichen Signals AS entsprechen. Trotz dieser Unschärfe läßt sich aufgrund der Fuzzy-Theorie eine eindeutige Zuordnung herstellen, wobei die Bezugsinformationen BZI wie ein holografisches Filter wirken.

Das in Fig. 1 gezeigte Ausführungsbeispiel stellt nur eine bevorzugte der möglichen Realisierungen dar. So könnten die elektrischen Steuersignale z. B. zunächst in Impulsfolgen mit einer der jeweiligen Bewertungsstufe entsprechenden Impulsfolgezeit oder in ähnlich frequenzmodulierte Signale umgewandelt werden, die erst durch einen auf die jeweilige Frequenz ansprechenden Empfänger digitalisiert werden, beispielsweise in Form einer « 1 aus n »-Darstellung.

Weiterhin könnte die Auswertung der digitalisierten Teilinformationen je Auswertekanal bezüglich bekannter Strukturen durch ein entsprechendes Verknüpfungsnetzwerk, z. B. Diodennetzwerk, analog den bekannten Identifiziernetzwerken vorgenommen werden. Jedoch ist eine solche verdrahtete Vergleichslogik bekanntlich wenig flexibel und für unbekannte Strukturen nicht anwendbar.

Auch könnten anstelle der optischen Eingangssignale unmittelbar elektrische Signale in Verbindung mit einem elektrischen Strahler- und Empfängerfeld zur Interferenzbildung verwendet werden.

Ausgehend von der beschriebenen Form der digitalen Verarbeitung von Interferenzsignalen einer Interferenzebene zur Erfassung und Erkennung von komplexen Strukturen ist natürlich auch die Erzeugung der Interferenzsignale für die Abbildung der Strukturen in der Interferenzebene von besonderer Bedeutung für den Anwendungsbereich der Erfindung.

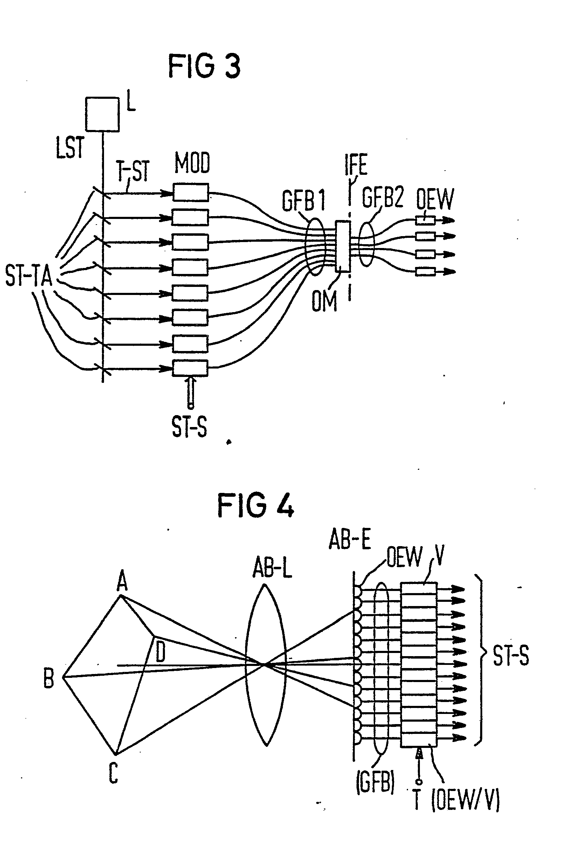

Ohne weitere Überlegungen sind Prinzipien der Holografie geeignet, wenn räumliche Strukturen abzubilden sind, wobei die Hologrammebene der Interferenzebene gleichzusetzen ist. Das setzt die Ausleuchtung der abzubildenden räumlichen Struktur mit kohärentem Licht voraus. Dies ist aber nicht immer günstig realisierbar und außerdem lassen sich viele Strukturen, z. B. die Spannungsstruktur in einem Körper, die Struktur von Sprachinformationen, auf diesem Weg nicht erfassen, da die Kenngrößen der Struktur z. B. nur in Form von analogen elektrischen Signalen vorliegen, aus denen durch Interferenz erst die partiellen Interferenzsignale der Interferenzebene zu bilden sind. Dies ist beispielsweise mit einer Anordnung gemäß Fig. 3 möglich.

Die von einem kohärentem Strahler L, z. B. einem Laser, ausgehende Strahlung LST wird durch eine Strahlteileranordnung ST-TA, z. B. aus halbdurchlässigen Spiegeln, in eine Vielzahl von Teilstrahlen T-ST aufgespalten, und jeder dieser Teilstrahlen wird z. B. über ein elektrooptisches Medium als Modulator MOD einem Lichtleiter zugeführt, der beispielsweise die Amplitude der zugeführten Strahlerwelle abhängig von einem elektrischen Signal ST-S als Steuersignal moduliert. Die von diesen Modulatoren MOD ausgehenden Lichtleiter, z. B. in Form von Glasfasern, werden zu einem kohärenten Bündel GFB1 zusammengefaßt und an die eine Seite eines im vorliegenden fall optischen Mischers OM, beispielsweise in Form eines optischen Sternkopplers, angeschlossen. Auf der gegenüberliegenden Seite des optischen Mischers OM sind ebenfalls Lichtleiter als Auswertekanäle in Form eines kohärenten Bündels GFB2 angekoppelt, und zwar in der Weise, daß Lichtsignale jedes Lichtleiters des Eingangsbündels GFB1 jeden Lichtleiter des Ausgangsbündels GFB2 mit annähernd gleicher Intensität erreichen.

Damit bei dieser Mischung der Eingangssignale zu individuellen Summensignalen für die Auswertekanäle auch der benötigte Interferenzeffekt mit Bezug auf die Interferenzebene IFE gegeben ist, ist Voraussetzung, daß die Lichtsignale am Eingang des optischen Mischers OM eine feste Phasenbeziehung zueinander aufweisen, also Phasenkohärenz gegeben ist. Dies wird durch die Ableitung der Trägersignale von einem gemeinsamen Laserstrahl LST durch die Strahlteileranordnung ST-TA gewährleistet. Aufgrund der unterschiedlichen langen Wege der einzelnen Teilstrahlen im optischen Mischer OM ergibt sich im unmodulierten Zustand der einzelnen Teilstrahlen in der Interferenzebene IFE ein Interferenzgrundmuster, das dann durch die Modulationssignale ST-S verändert wird und damit Aufschluß über die jeweils vorliegende Struktur gibt.

In analoger Weise könnten statt der mit optischen Wellen arbeitenden Anordnung auch solche mit anderen elektromagnetischen Wellen als Träger arbeitende Anordnungen verwendet werden.

Auch ist es vollkommen gleichgültig, auf welche Weise die Modulationssignale ST-S erhalten werden. Voraussetzung ist lediglich, daß sie in ihrer Gesamtheit die jeweils vorliegende Struktur ausreichend bestimmt kennzeichnen. Daher ist es mit der Anordnung gemäß Fig. 3 auch möglich, räumliche Strukturen ohne Ausleuchtung mit kohärentem Licht zu erfassen und abzubilden, wie Fig. 4 zeigt. Die räumliche Struktur A, B, C, D wird zu diesem Zweck mit Hilfe einer Abbildungslinse AB-L in einer zweidimensionalen Ebene AB-E abgebildet, die beispielsweise durch eine Vielzahl von optoelektronischen Wandlern OEW oder aber vorteilhafter wegen der besseren Auflösung durch die plangeschliffene Ebene eines kohärenten Glasfaserbündels GFB gebildet wird, wobei an die anderen Enden des Glasfaserbündels die optoelektronischen Wandler gegebenenfalls mit Verstärker V angeschlossen sind. Die optoelektronischen Wandler OEW und die Verstärker V arbeiten ebenfalls taktgesteuert in Anpassung an den gewählten Auswertetakt AT (Fig. 1), so daß die Modulationssignale ST-S jeweils für ein Taktintervall konstant sind.

**Patentansprüche**

1. Verfahren zur Erfassung und/oder Erkennung komplexer Strukturen auf der Basis der « Fuzzy »-Theorie mit paralleler Informationsverarbeitung der die jeweils vorgegebene Struktur beschreibenden Kenngrößen durch Darstellung von aus jeweils allen Kenngrößen in geringerer Anzahl gebildeten analogen Summenkenngrößen in einer Interferenzebene und parallele Weiterverarbeitung der gleichzeitig vorliegenden einzelnen Summenkenngrößen durch individuelle Auswertekanäle, dadurch gekennzeichnet, daß die in der Interferenzebene (IFE) gebildeten und den einzelnen Auswertekanälen (AWK) in Form von analogen Signalen unmittelbar zugeführten Summenkenngrößen jeweils als elektrische Signale nach einem einheitlichem Schema zu vorgegebenen Zeitpunkten bewertet und unmittelbar oder mittelbar in digital verarbeitbare Teilinformationen umgewandelt werden und daß die jeweils erhaltenen digitalen Teilinformationen aller Auswertekanäle (AWK) zusammen als die die jeweils vorgegebene Struktur kennzeichnende digitale Abbildungsinformation gleichzeitig der weiteren digitalen Informationsverarbeitung zugeführt werden.

2. Verfahren nach Anspruch 1, dadurch gekennzeichnet, daß für die Erkennung vorgegebener Strukturen die jeweils von den Auswertekanälen (AWK) gelieferte Abbildungsinformation mit verschiedenen vorgegebenen Strukturen entsprechenden Bezugsinformationen (z. B. BZI1 bis BWIx) verglichen werden und daß die jeweils erkannte Struktur durch eine entsprechende 1-Bit-Information (z. B. STP1) des zugehörigen Vergleichers (VG1) angezeigt wird.

3. Verfahren nach Anspruch 2, dadurch gekennzeichnet, daß die jeweilige 1-Bit-Information (z. B. STP1) als Steuerinformation einen individuell zugeordneten Steuerungsprozess auslöst.

4. Verfahren nach Anspruch 2 oder 3, dadurch gekennzeichnet, daß bei Vorliegen einer digitalen Abbildungsinformation, die keiner der bisher gespeicherten Bezugsinformationen entspricht, die bisher unbekannte Abbildungsinformation als zusätzliche neue Bezugsinformation abgespeichert wird.

5. Verfahren nach einem der Ansprüche 1 bis 4, dadurch gekennzeichnet, daß die Darstellung der Summenkenngrößen in der Interferenzebene (IFE) direkt mit Hilfe kohärenter Strahlung durch holografische Abbildung der vorgegebenen Struktur in der Interferenzebene (IFE) erfolgt.

6. Verfahren nach einem der Ansprüche 1 bis 4, dadurch gekennzeichnet, daß für die einzelnen Kenngrößen der vorgegebenen Struktur individuelle Informationskanäle (T-ST) verwendet werden, die mit Trägerwellen gleicher Wellenlänge und fest vorgegebenen konstanten Phasenbeziehungen am Eingang einer Interferenzanordnung (OM) gespeist werden, daß den Trägerwellen die zugehörigen Kenngrößen (ST-S) jeweils durch Amplitudenmodulation (Modulatoren MOD) aufgeprägt werden und daß die amplitudenmodulierten Trägerwellen parallel einem den Eingang einer Interferenzanordnung (OM) bildenden Strahlerfeld und von diesem einen die Interferenzebene (IFE) bildenden Empfängerfeld als Ausgang der Interferenzanordnung (OM) zugeführt werden.

7. Anordnung zur Durchführung des Verfahrens nach einem der Ansprüche 1 bis 6, dadurch gekennzeichnet, daß an die Interferenzebene (IFE) ein kohärentes Bündel (GFB2) von die einzelnen Auswertekanäle bildenden Lichtleitern (z. B. Glasfasern) angeschlossen ist und daß jeder Lichtleiter mit einem optoelektronischen Wandler (z. B. Fotodiode OEW) gekoppelt ist, der den zugeführten Lichtstrahl in ein entsprechendes analoges elektrisches Signal umwandelt, das dann bewertet wird.

8. Anordnung nach Anspruch 7, dadurch gekennzeichnet, daß mit jedem optoelektronischen Wandler (OEW) unmittelbar ein Analog/Digitalwandler (A/D) gekoppelt ist, dessen Ausgangsleitungen (DL) mit dem angeschlossenen digitalen Verarbeitungssystem (z. B. Vergleicher VG1 bis VGx) verbunden sind.

9. Anordnung nach Anspruch 7 oder 8, dadurch gekennzeichnet, daß die die digitale Abbildungsinformation liefernden Steuerleitungen (DL) parallel mit einer wenigstens der Anzahl der verschiedenen vorgegebenen Strukturen entsprechenden Anzahl von Vergleichern (VG1 bis VGx) verbunden ist und daß jeder Vergleicher (z. B. VG1) mit einem die Bezugsabbildungsinformation (BZI1) einer der vorgegebenen Strukturen gespeichert enthaltenen Speicher gekoppelt ist.

10. Anordnung nach Anspruch 9, dadurch gekennzeichnet, daß die die digitale Abbildungsinformation liefernden Steuerleitungen (DL) außerdem mit der Informationseingabesteuerung für den Bezugsinformationsspeicher gekoppelt sind.

11. Anordnung nach einem der Ansprüche 7 bis 10 zur Durchführung der Verfahren nach Anspruch 5 oder 6, dadurch gekennzeichnet, daß die Interferenzbildung durch einen optischen Mischer (z. B. Sternkoppler OM) erfolgt, an dessen eine Seite ein kohärentes Bündel (GFB1) von jeweils eine der Kenngrößen führenden Lichtleitern und an dessen als Interferenzebene (IFE) wirkender andere Seite das die Auswertekanäle bildende kohärente Bündel (GFB2) von Lichtleitern angeschlossen ist.

12. Anordnung nach Anspruch 11 zur Durchführung des Verfahrens nach Anspruch 6, gekennzeichnet durch einen kohärenten Strahler (z. B. Laser L), der mit einer Strahlteileranordnung (ST-TA) zur Erzeugung einer der Anzahl der Lichtleiter auf der Eingangsseite des optischen Mischers (OM) entsprechenden Anzahl von Teilstrahlen (T-ST) gekoppelt ist, und durch von diesen Teilstrahlen (T-ST) gespeiste und durch die Kenngrößen bildenden elektrischen Steuersignale (ST-S) gesteuerte Modulatoren (MOD), deren Ausgänge mit den Lichtleitern zur Speisung des optischen Mischers (OM) gekoppelt sind.

**Claims**

1. A method of detecting and/or recognising complex structures on the basis of the « Fuzzy theory », using parallel information-processing of the characteristic values which are descriptive of the respective given structure, by displaying in an interference plane analogue sum characteristic values, formed from all the characteristic values in a smaller number, and by parallel further processing of the simultaneously occurring individual sum characteristic values by individual analysis-channels, characterised in that the sum characteristic values which are formed in the interference plane (IFE) and which are supplied directly to the individual analysis-channels (AWK) in the form of analogue signals are each evaluated as electrical signals at predetermined times in accordance with a uniform plan and are converted either directly or indirectly into digitally processable items of sub-information, and that the respective items of acquired digital sub-information of all the analysis-channels (AWK) are together supplied simultaneously to the further digital information-processing stage as the digital image information which characterises the respective given structure.

2. A method as claimed in Claim 1, characterised in that for the recognition of predetermined structures, the image information supplied by the analysis-channels (AWK) is compared with items of reference information (e. g. BZI1 to BZIx) corresponding to different predetermined structures, and that the respective recognised structure is indicated by a corresponding one-bit information item (e. g. STP1) of the associated comparator (VG1).

3. A method as claimed in Claim 2, characterised in that the respective item of one-bit information (e. g. STP1) triggers an individually assigned control process as control information.

4. A method as claimed in Claim 2 or 3, characterised in that on the occurrence of an item of digital image information which corresponds to none of the previously stored items of reference information, the as yet unknown item of an image information is stored as an additional new item of reference information.

5. A method as claimed in one of the Claims 1 to 4 characterised in that the display of the sum characteristic values in the interference plane (IFE) is carried out directly using coherent radiation by holographic imaging of the given structure in the interference plane (IFE).

6. A method as claimed in one of the Claims 1 to 4, characterised in that for the individual characteristic values of the given structure, individual information-channels (T-ST) are used which are fed in to the input of an interference arrangement (OM) with carrier-waves of equal wavelength and with predetermined constant phase relationships, that the associated characteristic values (ST-S) are impressed upon the carrier-waves by amplitude-modulation (modulators OD), and that the amplitude-modulated carrier-waves are supplied in parallel to a radiator field which forms the input of an interference arrangement (OM) and from the latter are supplied to a receiver field which forms the interference plane (IFE) as the output of the interference arrangement (OM).

7. An arrangement for executing the method claimed in one of the Claims 1 to 6, characterised in that the interference plane (IFE) is coupled to a coherent group (GFB2) of optical-conductors (e. g. glass-fibres) which form the individual analysis-channels, and that each optical-conductor is coupled to an opto-electronic transducer (e. g. photo-diode OEW) which converts the supplied light-beam into a corresponding, analogue electrical signal which is then evaluated.

8. An arrangement as claimed in Claim 7, characterised in that each opto-electronic transducer (OEW) is directly coupled to an analogue of the digital converter (A/D) whose output lines (DL) are connected to the connected digital-processing system (e. g. comparators VG1 to VGx).

9. An arrangement as claimed in Claim 7 or 8, characterised in that the control lines (DL) which supply the digital image information are connected in parallel with a number of comparators (VG1 to VGx), which correspond at least to the number of the different given structures, and that each comparator (e. g. VG1) is coupled to a store which stores the reference image information (BZI1) of one of the given structures.

10. An arrangement as claimed in Claim 9, characterised in that the control lines (DL) which supply the digital image information are also coupled to the information input control unit for the reference information store.

11. An arrangement as claimed in one of the Claims 7 to 10 for the execution of the methods claimed in Claims 5 or 6, characterised in that the interference formation takes place by means of an optical-mixer (e. g. star coupler OM) to one side of which is connected a coherent group (GFB1) of optical-conductors which each conduct one of the characteristic values, and the other side of which — which serves as interference plane (IFE) — is connected to the coherent group (GFB2) of optical-conductors which forms the analysis-channels.

12. An arrangement as claimed in Claim 11 for the execution of the method claimed in Claim 6, characterised by a coherent radiator (e. g. laser L) which is coupled to a beam-splitter arrangement (ST-TA) which generates a number of subsidiary beams (T-ST) corresponding to the number of optical-conductors at the input of the optical-mixer (OM), and characterised by modulators (MOD) which are supplied with these subsidiary beams (T-ST) and are controlled by electrical control signals (ST-S) which form the characteristic values, and whose outputs are coupled to the optical-conductors for the supply of the optical-mixer (OM).

**Revendications**

1. Procédé pour la saisie et/ou la reconnaissance de structures complexes sur la base de la théorie « fuzzy », avec traitement parallèle de l'information des grandeurs caractéristiques décrivant la structure préfixée par représentation de grandeurs caractéristiques somme analogiques formées en faible nombre de toutes les grandeurs caractéristiques dans un plan d'interférence et avec traitement consécutif parallèle des différentes grandeurs caractéristiques somme présentes simultanément par des canaux d'exploitation individuels, caractérisé en ce que les grandeurs caractéristiques somme, formées dans le plan d'interférence (IFE) et amenées directement aux différents canaux d'exploitation (AWK) sous forme de signaux analogiques, sont pondérées comme des signaux électriques selon un schéma uniforme, à des instants prédéterminés, et sont transformées directement ou indirectement en informations partielles susceptibles d'être traitées numériquement, et que les informations partielles numériques obtenues à chaque fois de tous les canaux d'exploitation (AWK) sont amenées ensemble et simultanément, en tant qu'information de reproduction numérique caractérisant la structure préfixée, au traitement numérique consécutif des informations.

2. Procédé selon la revendication 1, caractérisé en ce que, pour la reconnaissance de structures préfixées, l'information de reproduction fournie chaque fois par les canaux d'exploitation (AWK)' est comparée avec des informations de référence (par exemple BZI à BZIx), correspondant à différentes structures préfixées, et que la structure reconnue à chaque fois est indiquée par une information d'un seul bit (par exemple STF1) correspondante du comparateur (VG1) associé.

3. Procédé selon la revendication 2, caractérisé en ce que l'information d'un seul bit (par exemple STP1) déclenche, en tant qu'information de commande, un processus de commande coordonné individuellement.

4. Procédé selon la revendication 2 ou 3, caractérisé en ce que, en cas de présence d'une information de reproduction numérique ne correspondant à aucune des informations de référence mémorisées jusqu'à ce moment, l'information de reproduction inconnue jusqu'à ce moment est mémorisée en tant que nouvelle information de référence supplémentaire.

5. Procédé selon une des revendications 1 à 4, caractérisé en ce que la représentation des grandeurs caractéristiques somme dans le plan d'interférence (IFE) s'effectue directement à l'aide d'un rayonnement cohérent par reproduction holographique de la structure préfixée dans le plan d'interférence (IFE).

6. Procédé selon une des revendications 1 à 4, caractérisé par l'utilisation, pour les différentes grandeurs caractéristiques de la structure préfixée, de canaux d'information (T-ST) individuels qui sont alimentés avec des ondes porteuses de même longueur d'onde et de relations de phase constantes et préfixées, à l'entrée d'un dispositif d'interférence (OM), en ce que les grandeurs caractéristiques (ST-S) associées sont imprimées aux ondes porteuses par modulation d'amplitude (modulateurs MOD) et que les ondes porteuses modulées en amplitude sont amenées en parallèle à un système d'émetteurs de rayonnement, formant l'entrée d'un dispositif d'interférence (OM), et sont envoyées par ce système à un système de récepteurs, formant le plan d'interférence (IFE), en tant que sortie du dispositif d'interférence (OM).

7. Dispositif pour la mise en oeuvre du procédé selon une des revendications 1 à 6, caractérisé en ce qu'un faisceau cohérent (GFB2) de conducteurs de lumière (de fibres de verre par exemple) formant les différents canaux d'exploitation, est raccordé au plan d'interférence (IFE) et que chaque conducteur de lumière est couplé à un convertisseur optoélectronique (une photodiode OEW par exemple) qui convertit le faisceau lumineux qui lui est envoyé en un signal électrique analogique correspondant, lequel est ensuite pondéré.

8. Dispositif selon la revendication 7, caractérisé par le couplage direct à chaque convertisseur optoélectronique (OEW) d'un convertisseur analogique/numérique (A/D) dont les lignes de sortie (DL) sont connectées au système de traitement numérique (comparateurs VG1 à VGx par exemple) raccordé.

9. Dispositif selon la revendication 7 ou 8, caractérisé en ce que les lignes de commande (DL) délivrant l'information de reproduction numérique sont connectées en parallèle à un nombre de comparateurs (VG1 à VGx) correspondant au moins au nombre des différentes structures prédéterminées et que chaque comparateur (VG1 par exemple) est couplé à une mémoire dans laquelle est mémorisée l'information de reproduction de référence (BZI1) d'une des structures préfixées.

10. Dispositif selon la revendication 9, caractérisé en ce que les lignes de commande (DL) délivrant l'information de reproduction numérique sont couplées, en outre, à la commande d'entrée d'information pour la mémoire d'information de référence.

11. Dispositif selon une des revendications 7 à 10 pour la mise en oeuvre du procédé selon la revendication 5 ou 10, caractérisé en ce que la formation d'interférence s'effectue par un mélangeur optique (par exemple un coupleur en étoile OM) à un côté duquel est raccordé un faisceau cohérent (GFB1) de conducteurs de lumière transmettant chacun l'une des grandeurs caractéristiques, et à l'autre côté duquel, agissant comme plan d'interférence (IFE), est raccordé un faisceau cohérent (GFB2) de conducteurs de lumière constituant les canaux d'exploitation.

12. Dispositif selon la revendication 11 pour la mise en œuvre du procédé selon la revendication 6, caractérisé par un émetteur de rayonnement cohérent (laser L par exemple) qui est couplé à un dispositif séparateur de faisceau (ST-TA) destiné à générer un nombre de faisceaux partiels (T-ST) correspondant au nombre des conducteurs de lumière sur le côté entrée du mélangeur optique (OM), ainsi que par des modulateurs (MOD) alimentés par ces faisceaux partiels (T-ST) et commandés par des signaux de commande électriques (ST-S) formant les grandeurs caractéristiques, modulateurs dont les sorties sont couplées aux conducteurs de lumière servant à l'alimentation du modulateur optique (OM).

# FIG 1

STP1    BZI1    STPx    BZIx

IFE  AWK
A/D    DL
OEW    VG 1    VGx

AT

# FIG 2

AST
10

BZIx

DS    8    AS

5

3

2    3    5
1    2    0    0    4 4 4

0    0    0    1    0    0

1  2  3  4  5  6  7  8  9  10  11  12  13  14  15  16...  AWK

# FIG 3

# FIG 4